# EUROPÄISCHE PATENTSCHRIFT

(11) **EP 1 579 750 B1**
(45) Veröffentlichungstag und Bekanntmachung des Hinweises auf die Patenterteilung: **16.06.2010**
(21) Anmeldenummer: 05004987.3
(22) Anmeldetag: 08.03.2005
(51) Int. Cl.: A01B 59/06

(54) **Dreipunktaufhängung für eine Arbeitsmaschine**
Working machine three point hitch
Accouplement trois points pour machine de travail

(30) Priorität: 24.03.2004 DE 102004014797
(43) Veröffentlichungstag der Anmeldung: 28.09.2005
(73) Patentinhaber: CLAAS Selbstfahrende Erntemaschinen GmbH, 33428 Harsewinkel (DE)
(72) Erfinder: Loebe, Stefan, 33848 Bad Saulgau (DE)

(56) Entgegenhaltungen:
- EP-A- 0 992 371
- DE-A1- 10 122 955
- FR-A- 2 454 255
- US-A- 3 583 494
- US-A- 5 697 454
- US-A- 5 971 082

## Beschreibung

Die Erfindungen betrifft eine Dreipunktaufhängung nach dem Oberbegriff des Anspruchs 1.

Aus dem Stand der Technik sind zahlreiche schwenkbare Dreipunktaufhängungen zur Koppelung von Arbeitsgeräten an Antriebsfahrzeugen bekannt. Verschwenkbare Dreipunktaufhängungen kommen sowohl beim Zugbetrieb als auch im Schubbetrieb von Arbeitsgeräten zum Einsatz. Durch das Schwenken der Dreipunktaufhängung bewegen sich das Arbeitsgerät und die Arbeitsmaschine auch bei Kurvenfahrt oder beim Fahren der Arbeitsmaschine im bodenschonenden Hundegang in parallelen Richtungen. Diese Anordnung ist insbesondere bei als Bodenbearbeitungsgeräten ausgeführten Arbeitsgeräten vorteilhaft, damit auf das in den Boden eingreifende Bodenbearbeitungsgerät nur geringe Schrägzugkräfte wirken, die ansonsten zu Schäden am Bodenbearbeitungsgerät führen. Bodenbearbeitungsgeräte, die nicht in Fahrtrichtung des Antriebsfahrzeugs geschoben bzw. gezogen werden, haben außerdem eine mangelhafte Bodenbearbeitung zur Folge.

Aus der DE 101 22 955 ist eine Aufhängungsanordnung für eine Arbeitsmaschine bekannt geworden, die mit einem Rahmen versehen ist, der um eine vertikale Schwenkachse drehbar ist. Das an dem Rahmen befestigte Paar Zugarme, das um eine horizontale Achse schwenkbar ist und die an dem Rahmen befestigte Zugstange werden bei der Bewegung des Rahmens mitgedreht.

Nachteilig bei dieser Aufhängungsanordnung ist, das die Konstruktion sehr viel Bauraum zwischen Arbeitmaschine und Arbeitsgerät benötigt und dadurch das Nachlaufverhalten des Arbeitsgerätes und die Überdeckung der Fahrspuren nicht optimal ist.

Der Erfindung liegt daher die Aufgabe zugrunde eine gattungsgemäße Dreipunktaufhängung zu verbessern.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Indem die zwei Unterlenker an den Rahmen angelenkt sind wobei der Rahmen um eine annähernd vertikale Achse schwenkbar ist, kann die Bauhöhe des Rahmens reduziert werden und der Rahmen und die Drehachse unterhalb des Fahrzeugrahmens angeordnet werden.

Dadurch, dass der Oberlenker über ein Kugelgelenk am Fahrzeugrahmen angelenkt ist, kann der Oberlenker in vertikale und horizontale Richtungen verschwenkt werden.

Damit die Dreipunktaufhängung und der Rahmen mit den Unterlenkern um den gleichen Bezugspunkt drehen, ist das Kugelgelenk des Oberlenkers auf der vertikalen Drehachse angeordnet.

Eine besonders vorteilhafte Ausführung ergibt sich, wenn der Rahmen über einen Bolzen um die vertikale Achse schwenkbar mit einem Unterrahmen verbunden ist, wobei der Unterrahmen wenigstens teilweise unterhalb des Fahrzeugrahmens angeordnet und am Fahrzeugrahmen lösbar befestigt ist. Die erfindungsgemäße Dreipunktaufhängung kann somit einfach gegen eine nicht verschwenkbare Dreipunktaufhängung oder umgekehrt ausgetauscht werden.

Um den Rahmen gegenüber dem Unterrahmen zu verschwenken, ist der Unterrahmen über wenigstens ein Stellglied mit dem Rahmen verbunden.

Vorteilhafterweise ist das Stellglied ein doppelt wirkender Hydraulikzylinder, der in horizontaler Lage unterhalb des Fahrzeugrahmens angeordnet ist. Mit dem platzsparend eingebauten Hydraulikzylinder kann die Dreipunktaufhängung in einer bestimmten Lage festgesetzt werden.

Der Unterlenker ist über eine längenveränderliche Pendelstütze am Fahrzeugrahmen angelenkt, damit er in der Höhe gegenüber dem Fahrzeugrahmen verstellbar und in seiner Lage festlegbar ist.

Die längenveränderliche Pendelstütze ist vorteilhafterweise eine doppelt wirkende Kolbenzylindereinheit mit einer Kolbenstange und einem Zylinderrohr, die hydraulisch verstellbar und blockierbar ist.

Damit die Unterlenker gegenüber dem Fahrzeugrahmen horizontal verstellbar sowie gegenüber dem Rahmen vertikal verstellbar sind, ist das Zylinderrohr über ein weiteres Kugelgelenk in den Gelenkpunkten mit dem Fahrzeugrahmen verbunden und die Kolbenstange über ein Gelenklager in den Gelenkpunkten um eine horizontale Achse schwenkbar mit dem Unterlenker verbunden.

Die Kolbenzylindereinheiten sind vorteilhafterweise bei vollständig in die Zylinderrohre eingefahrenen Kolbenstangen gleichweit von der vertikalen Achse entfernt und verlaufen parallel zu der Drehachse, wenn die Unterlenker in eine obere Position angehoben sind und gleichzeitig der Rahmen mit den daran angelenkten Unterlenkern in eine Neutralstellung in Richtung des Fahrzeugrahmens geschwenkt ist, so dass ein Schwenken des Rahmens auch ohne eine Anpassung der Länge der Kolbenzylindereinheiten erfolgen kann.

Damit die Kolbenzylindereinheiten zusammen in eine Richtung verstellbar sind, sind die Kolbenzylindereinheiten beim Schwenken der Unterlenker um die horizontale Achse parallel geschaltet.

Die Kolbenzylindereinheiten sind beim Schwenken des Rahmens um die vertikale Achse in Reihe geschaltet, um sie in unterschiedlichen Richtungen zu verstellen.

Weitere vorteilhafte Ausführungen sind Gegenstand weiterer Unteransprüche und werden an Hand eines in mehreren Figuren dargestellten Ausführungsbeispiels beschrieben.

Es zeigen:
- Fig.1: eine Draufsicht eines hinteren oder vorderen Abschnitts eines Fahrzeugrahmens 1 mit einer Dreipunktaufhängung 3.
- Fig.2: eine perspektivische Ansicht von oben auf den ausschnittsweise dargestellten Fahrzeugrahmen 1 mit der Dreipunktaufhängung 3,
- Fig.3: eine perspektivische Ansicht von vorne auf den Fahrzeugrahmen 1 und die Dreipunktaufhängung 3.

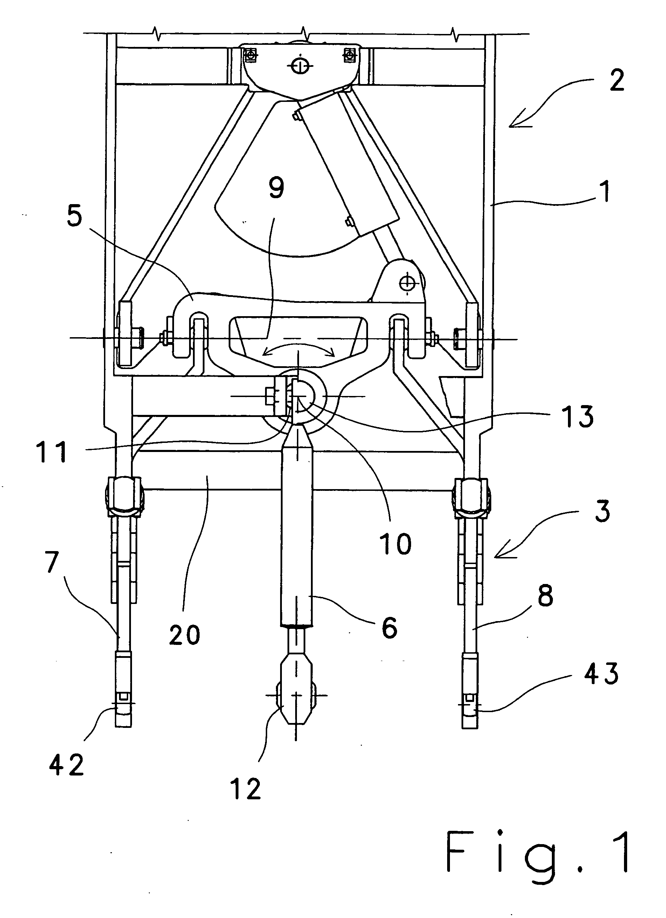

In Fig. 1 ist die Draufsicht eines hinteren oder vorderen Abschnitts eines Fahrzeugrahmens 1 eines Antriebsfahrzeuges 2 dargestellt. An dem Fahrzeugrahmen 1 ist eine an sich bekannte verschwenkbare Dreipunktaufhängung 3 zur Ankopplung eines Arbeitsgerätes befestigt, die im wesentlichen aus einem Rahmen 5, einem Oberlenker 6 und zwei Unterlenkern 7, 8 besteht, wobei die Unterlenker 7, 8 um eine horizontale Achse 9 höhenverschwenkbar sind. Erfindungsgemäß sind nur die beiden Unterlenker 7, 8 an den Rahmen 5 angelenkt, der um eine vertikale Achse 10 verschwenkbar ist. Der Oberlenker 6 ist über ein an sich bekanntes und daher hier nicht näher erläutertes Kugelgelenk 11 am Fahrzeugrahmen 1 angelenkt, das auf der vertikalen Achse 10 angeordnet ist. An seinem freien Ende ist der Oberlenker 5 mit einem weiteren an sich bekannten Kugelgelenk 12 ausgestattet. Die beiden Unterlenker 7, 8 der Dreipunktaufhängung 3 sind über eine Quertraverse 20 miteinander starr verbunden. Der Rahmen 5 mit den daran angelenkten Unterlenkern 7, 8 ist in Richtung des Fahrzeugrahmens 1 geschwenkt. An ihren freien Enden sind die Unterlenker 7, 8 mit je einem Fanghaken 42, 43 versehen. Die Fanghaken 42, 43 am freien Ende der Unterlenker 7, 8 und das Kugelgelenk 11 am freien Ende des Oberlenkers 9 nehmen das nicht dargestellte Arbeitsgerät auf.

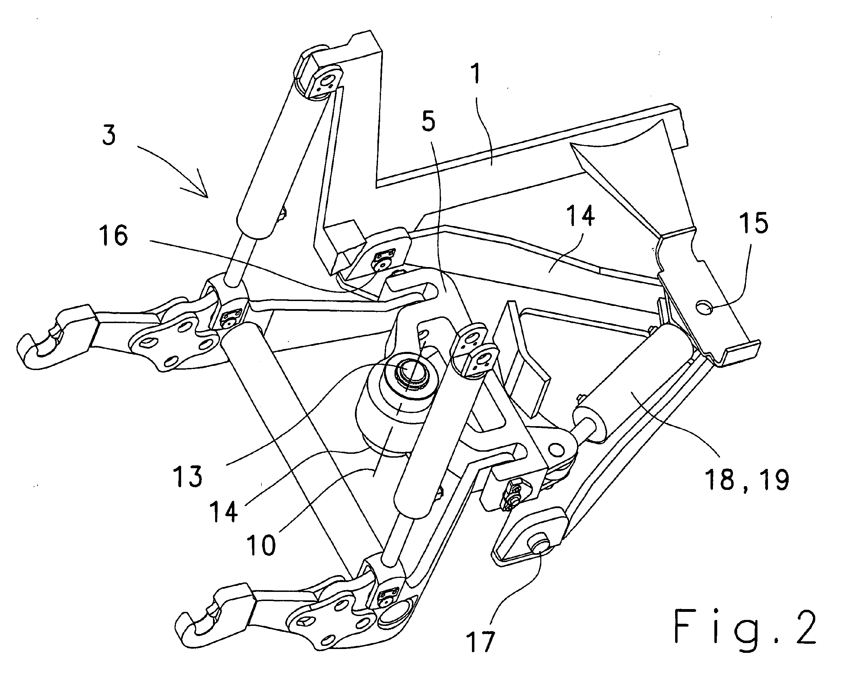

Fig. 2 zeigt eine perspektivische Ansicht von oben auf den teilweise dargestellten Fahrzeugrahmen 1 mit der Dreipunktaufhängung 3. Der Rahmen 5 ist über einen Bolzen 13 um die vertikale Achse 10 schwenkbar mit einem Unterrahmen 14 verbunden, der unterhalb des Fahrzeugrahmens 1 angeordnet ist und an den am Fahrzeugrahmen 1 vorgesehenen Befestigungspunkten 15, 16, 17 lösbar befestigt ist, die ansonsten zur Aufnahme einer nicht schwenkbaren Dreipunktaufhängung dienen. Zusätzlich ist der Rahmen 5 über ein als doppelt wirkender Hydraulikzylinder 18 ausgeführtes Stellglied 19 mit dem Unterrahmen 14 verbunden. Der Hydraulikzylinder 18 ist in horizontaler Lage unterhalb des Fahrzeugrahmens 1 angeordnet.

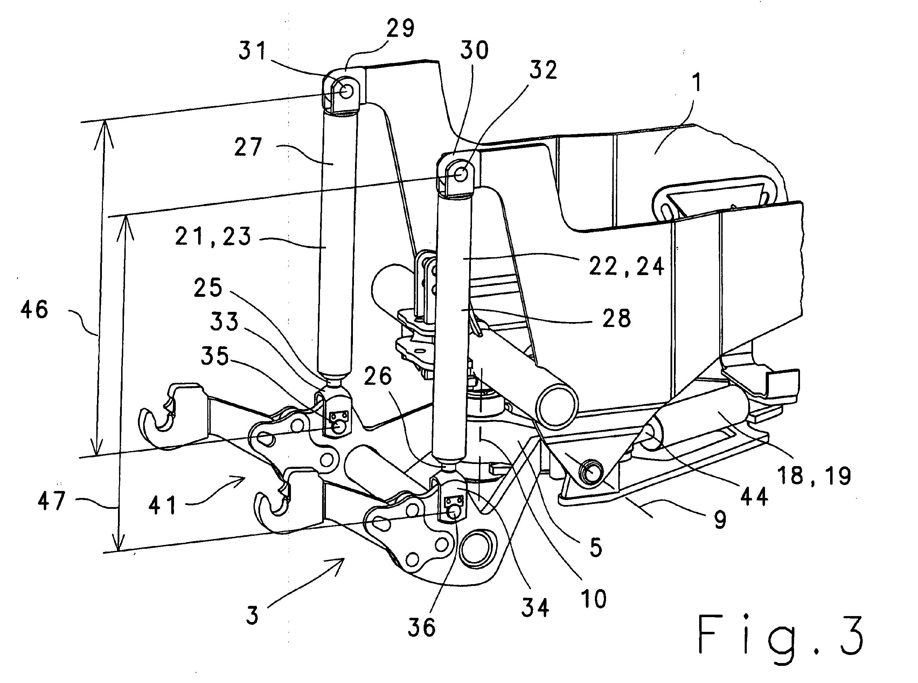

Fig. 3 zeigt eine perspektivische Ansicht von vorne auf den Fahrzeugrahmen 1 und die Dreipunktaufhängung 3. Beide Unterlenker 7, 8 sind jeweils über eine als Kolbenzylindereinheit 21, 22 ausgeführte längenveränderliche Pendelstütze 23, 24 an dem Fahrzeugrahmen 1 angelenkt. Die Kolbenzylindereinheiten 21, 22 bestehen aus je einer Kolbenstange 25, 26 und je einem Zylinderrohr 27, 28. Die Zylinderrohre 27, 28 sind über je ein weiteres an sich bekanntes Kugelgelenk 29, 30 in den Gelenkpunkten 31, 32 mit dem Fahrzeugrahmen 1 beweglich verbunden und die beiden Kolbenstangen 25, 26 sind über je ein Gelenklager 33, 34 in den Gelenkpunkten 35, 36 mit dem zugehörigen Unterlenker 7, 8 verbunden.

Die Gelenkpunkte 31, 32, 35, 36 sind derart am Fahrzeugrahmen 1 und an den Unterlenkern 7, 8 angeordnet, dass die beiden Kolbenzylindereinheiten 21, 22 bei vollständig in die Zylinderrohre 27, 28 eingefahrenen Kolbenstangen 25, 26 gleichweit von der Drehachse 10 entfernt parallel zu der Drehachse 10 verlaufen, wenn die Unterlenker 7, 8 in eine obere Position 41 angehoben sind und gleichzeitig der Rahmen 5 mit den daran angelenkten Unterlenkern 7, 8 um die Drehachse 10 in Richtung des Fahrzeugrahmens 1 geschwenkt ist.

Um die Unterlenker 7, 8 nach unten zu verschwenken, werden die beiden Kolbenzylindereinheiten 21, 22 parallel geschaltet und kolbenseitig druckbeaufschlagt. Die Kolbenstangen 25, 26 fahren gleichzeitig und mit gleicher Geschwindigkeit nach unten aus, wobei sich die Unterlenker 7, 8 entgegen dem Uhrzeigersinn um die horizontale Drehachse 9 drehen. Um die Unterlenker 7, 8 wieder anzuheben, werden die beiden Kolbenzylindereinheiten 21, 22 kolbenstangenseitig druckbeaufschlagt. Die Kolbenstangen 25, 26 fahren gleichzeitig und mit gleicher Geschwindigkeit ein, wobei sich die Unterlenker 7, 8 im Uhrzeigersinn um die horizontale Drehachse 9 drehen.

Um den Rahmen 5 mit den Unterlenkern 7, 8 im Uhrzeigersinn zu verschwenken wird der doppelt wirkende Hydraulikzylinder 18 kolbenseitig druckbeaufschlagt. Dabei fährt die Kolbenstange 44 des Hydraulikzylinders 18 aus, wobei sich der Rahmen 5 um den Bolzen 13 dreht. Entsprechend wird der Rahmen 5 mit den Unterlenkern 7, 8 entgegen dem Uhrzeigersinn verschwenkt, wenn der Hydraulikzylinder 18 kolbenstangenseitig druckbeaufschlagt wird, wobei die Kolbenstange 44 des Hydraulikzylinders 18 einfährt.

Das Verschwenken des Rahmens 5 ist zum einen nur möglich, wenn die Kolbenzylindereinheiten 21, 22 parallel zur vertikalen Drehachse 10 verlaufen, wenn die Dreipunktaufhängung 3 in Richtung des Fahrrahmens 1 geschwenkt ist. Durch die zuvor beschriebene Anordnung der Gelenkpunkte 31, 32, 35, 36 ist eine Anpassung der Länge der Kolbenzylindereinheiten 21, 22 beim Schwenken des Rahmens 5 nicht zwingend notwendig, da sich der Abstand 46 der Gelenkpunkte 31 und 35 und der Abstand 47 der Gelenkpunkte 32 und 36 beim Schwenken des Rahmens 5 zur linken oder rechten Seite des Fahrzeugrahmens 1 um den gleichen Betrag vergrößern bzw. beim Schwenken des Rahmens 5 zur Mitte des Fahrzeugrahmens 1 um den gleichen Betrag verkleinern, was beim Schwenken des Rahmens 5 zur Seite zu einem Anheben bzw. beim Schwenken zur Mitte zu einem Senken der Unterlenker 7, 8 führt.

Befinden sich die Unterlenker 7, 8 in einer Position bei der die Kolbenzylindereinheiten 21, 22 schräg zur Drehachse 10 verlaufen, wenn die Dreipunktaufhängung 3 in Richtung des Fahrrahmens 1 geschwenkt ist, dann ändern sich der Abstand 46 der Gelenkpunkte 31 und 35 sowie der Abstand 47 der Gelenkpunkte 32 und 36 beim Schwenken der Dreipunktaufhängung 3 gegensinnig um den gleichen Betrag. Die Längen der Kolbenzylindereinheiten 7,8 müssen an die sich gegensinnig ändernden Abstände 46, 47 anpassbar sein, damit ein Schwenken des Rahmens 5 möglich ist. Hierzu werden die beiden Kolbenzylindereinheiten 21, 22 in Reihe geschaltet. Der Betrag um den die Kolbenstange 25, 26 der Kolbenzylindereinheit 21, 22 beim Schwenken des Rahmens 5 einfährt, entspricht dem Betrag um den der Kolben 26, 25 der Kolbenzylindereinheit 22, 21 ausfährt. Bei baugleichen Kolbenzylindereinheiten 21, 22 bedeutet dies, dass die Ölmenge, die aus dem Zylinderrohr 27, 28 durch die einfahrende Kolbenstange 25, 26 verdrängt wird, der Menge entspricht, die benötigt wird, um die Kolbenstange 26, 25 um den gleichen Betrag aus dem Zylinderrohr 28, 27 auszufahren.

### Bezugszeichenliste:

- 1: Fahrzeugrahmen
- 2: Antriebsfahrzeug
- 3: Dreipunktaufhängung
- 5: Rahmen
- 6: Oberlenker
- 7: Unterlenker
- 8: Unterlenker
- 9: Horizontale Drehachse
- 10: Vertikale Drehachse
- 11: Kugelgelenk
- 12: Weiteres Kugelgelenk
- 13: Bolzen
- 14: Unterrahmen
- 15: Befestigungselemente
- 16: Befestigungselemente
- 17: Befestigungselemente
- 18: Hydraulikzylinder
- 19: Stellglied
- 20: Quertraverse
- 21: Kolbenzylindereinheit
- 22: Kolbenzylindereinheit
- 23: Pendelstütze
- 24: Pendelstütze
- 25: Kolbenstange
- 26: Kolbenstange
- 27: Zylinderrohr
- 28: Zylinderrohr
- 29: Kugelgelenk
- 30: Kugelgelenk
- 31: Gelenkpunkt
- 32: Gelenkpunkt
- 33: Gelenklager
- 34: Gelenklager
- 35: Gelenkpunkt
- 36: Gelenkpunkt
- 41: obere Position
- 42: Fanghaken
- 43: Fanghaken
- 44: Kolbenstange
- 46: Abstand
- 47: Abstand

## Patentansprüche

1. An einem Fahrzeugrahmen (1) eines Antriebsfahrzeugs (2) befestigte Dreipunktaufhängung (3) zur Ankopplung eines Arbeitsgerätes, mit wenigstens einem Rahmen (5), zwei um zumindest eine horizontale Drehachse (9) schwenkbaren Unterlenkern (7, 8) und wenigstens einem Oberlenker (6),
**dadurch gekennzeichnet,**
**dass** nur die zwei Unterlenker (7, 8) an den Rahmen (5) angelenkt sind und der Rahmen (5) um eine annähernd vertikale Drehachse (10) schwenkbar ist.

2. Dreipunktaufhängung nach Anspruch 1,
**dadurch gekennzeichnet,**
**dass** der Oberlenker (6) über ein Kugelgelenk (11) am Fahrzeugrahmen (1) angelenkt ist.

3. Dreipunktaufhängung nach wenigstens einem der vorhergehenden Ansprüche,
**dadurch gekennzeichnet,**
**dass** das Kugelgelenk (11) auf der vertikalen Drehachse (10) angeordnet ist.

4. Dreipunktaufhängung nach Anspruch 1,
**dadurch gekennzeichnet,**
**dass** der Rahmen (5) über einen Bolzen (13) um die vertikale Drehachse (10) schwenkbar mit einem Unterrahmen (14) verbunden ist, wobei der Unterrahmen (14) wenigstens teilweise unterhalb des Fahrzeugrahmens (1) angeordnet und am Fahrzeugrahmen (1) lösbar befestigt ist.

5. Dreipunktaufhängung nach wenigstens einem der vorhergehenden Ansprüche,
**dadurch gekennzeichnet,**
**dass** der Unterrahmen (14) über wenigstens ein Stellglied (19) mit dem Rahmen (5) verbunden ist.

6. Dreipunktaufhängung nach wenigstens einem der vorhergehenden Ansprüche,
**dadurch gekennzeichnet,**
**dass** das Stellglied (19) ein doppelt wirkender Hydraulikzylinder (18) ist, der in horizontaler Lage unterhalb des Fahrzeugrahmens (1) angeordnet ist.

7. Dreipunktaufhängung nach wenigstens einem der vorhergehenden Ansprüche,
**dadurch gekennzeichnet,**
**dass** der Unterlenker (7, 8) über eine längenveränderliche Pendelstütze (23, 24) am Fahrzeugrahmen (1) angelenkt ist.

8. Dreipunktaufhängung nach wenigstens einem der vorhergehenden Ansprüche,
**dadurch gekennzeichnet,**
**dass** die längenveränderliche Pendelstütze (23, 24) eine doppelt wirkende Kolbenzylindereinheit (21, 22) mit einer Kolbenstange (25, 26) und einem Zylinderrohr (27, 28) ist.

9. Dreipunktaufhängung nach wenigstens einem der vorhergehenden Ansprüche,
**dadurch gekennzeichnet,**
**dass** das Zylinderrohr (27, 28) über ein weiteres Kugelgelenk (29, 30) in den Gelenkpunkten (31,32) mit dem Fahrzeugrahmen (1) verbunden ist und die Kolbenstange (25, 26) über ein Gelenklager (33, 34) in den Gelenkpunkten (35, 36) schwenkbar mit dem zugehörigen Unterlenker (7, 8) verbunden ist.

10. Dreipunktaufhängung nach wenigstens einem der vorhergehenden Ansprüche,
**dadurch gekennzeichnet,**
**dass** die Kolbenzylindereinheiten (21, 22) bei vollständig in die Zylinderrohre (27, 28) eingefahrenen Kolbenstangen (25, 26) gleichweit von der vertikalen Drehachse (10) entfernt parallel zu der vertikalen Drehachse (10) verlaufen, wenn die Unterlenker (7, 8) in eine obere Position (41) angehoben sind und gleichzeitig der Rahmen (5) mit den daran angelenkten Unterlenkern (7, 8) um die Drehachse (10) in Richtung des Fahrzeugrahmens (1) geschwenkt ist.

11. Dreipunktaufhängung nach wenigstens einem der vorhergehenden Ansprüche,
**dadurch gekennzeichnet,**
**dass** die Kolbenzylindereinheiten (21, 22) beim Schwenken der Unterlenker (7, 8) um die horizontale Drehachse (9) parallel geschaltet sind.

12. Dreipunktaufhängung nach wenigstens einem der vorhergehenden Ansprüche,
**dadurch gekennzeichnet,**
**dass** die Kolbenzylindereinheiten (21, 22) beim Schwenken des Rahmens (5) um die vertikale Drehachse (10) in Reihe geschaltet sind.

## Claims

1. A three-point suspension (3) fixed to a vehicle chassis frame (1) of a drive vehicle (2) for coupling a working implement thereto, comprising at least one frame (5), two lower links (7, 8) pivotable about at least one horizontal axis of rotation (9), and at least one upper link (6),
**characterised in that**
only the two lower links (7, 8) are pivotably mounted to the frame (5) and the frame (5) is pivotable about an approximately vertical axis of rotation (10).

2. A three-point suspension according to claim 1 **characterised in that** the upper link (6) is pivotably mounted to the vehicle chassis frame (1) by way of a ball joint (11).

3. A three-point suspension according to at least one of the preceding claims **characterised in that** the ball joint (11) is arranged on the vertical axis of rotation (10).

4. A three-point suspension according to claim 1 **characterised in that** the frame (5) is connected to a sub-frame (14) pivotably about the vertical axis of rotation (10) by way of a pin (13), wherein the sub-frame (14) is arranged at least partially beneath the vehicle chassis frame (1) and is fixed releasably to the vehicle chassis frame (1).

5. A three-point suspension according to at least one of the preceding claims **characterised in that** sub-frame (14) is connected to the frame (5) by way of at least one adjusting member (19).

6. A three-point suspension according to at least one of the preceding claims **characterised in that** the adjusting member (19) is a double-acting hydraulic cylinder (18) arranged in a horizontal position beneath the vehicle chassis frame (1).

7. A three-point suspension according to at least one of the preceding claims **characterised in that** the lower link (7, 8) is pivotably mounted to the vehicle chassis frame (1) by way of a variable-length pendulum support (23, 24).

8. A three-point suspension according to at least one of the preceding claims **characterised in that** the variable-length pendulum support (23, 24) is a double-acting piston cylinder unit (21, 22) having a piston rod (25, 26) and a cylinder tube (27, 28).

9. A three-point suspension according to at least one of the preceding claims **characterised in that** the cylinder tube (27, 28) is connected by way of a further ball joint (29, 30) in the joint points (31, 32) to the vehicle chassis frame (1) and the piston rod (25, 26) is pivotably connected by way of a joint mounting (33, 34) in the joint points (35, 36) to the associated lower link (7, 8).

10. A three-point suspension according to at least one of the preceding claims **characterised in that** when the piston rods (25, 26) are completely retracted into the cylinder tubes (27, 28) the piston cylinder units (21, 22) extend spaced equally from the vertical axis of rotation (10) parallel to the vertical axis of rotation (10) when the lower links (7, 8) are raised into an upper position (41) and at the same time the frame (5) with the lower links (7, 8) pivotably mounted thereto is pivoted about the axis of rotation (10) in the direction of the vehicle chassis frame (1).

11. A three-point suspension according to at least one of the preceding claims **characterised in that** the piston cylinder units (21, 22) are connected in parallel in the pivotal movement of the lower links (7, 8) about the horizontal axis of rotation (9).

12. A three-point suspension according to at least one of the preceding claims **characterised in that** the piston cylinder units (21, 22) are connected in series in the pivotal movement of the frame (5) about the vertical axis of rotation (10).

## Revendications

1. Attelage à trois points (3) fixé à un bâti (1) d'un véhicule de traction (2) pour l'accouplement d'un appareil de travail, comprenant au moins un bâti (5), deux bras inférieurs (7, 8) aptes à pivoter autour d'au moins un axe de rotation horizontal (9) et au moins un bras supérieur (6), **caractérisé en ce que** seuls les deux bras inférieurs (7, 8) sont articulés avec le bâti (5), et le bâti (5) est apte à pivoter autour d'un axe de rotation sensiblement vertical (10).

2. Attelage à trois points selon la revendication 1, **caractérisé en ce que** le bras supérieur (6) est articulé avec le bâti de véhicule (1) par l'intermédiaire d'un joint à rotule (11).

3. Attelage à trois points selon au moins une des revendications précédentes, **caractérisé en ce que** le joint à rotule (11) est disposé sur l'axe de rotation vertical (10).

4. Attelage à trois points selon la revendication 1, **caractérisé en ce que** le bâti (5) est relié à un bâti inférieur (14) par l'intermédiaire d'un goujon (13) en étant apte à tourner autour de l'axe de rotation vertical (10), le bâti inférieur (14) étant disposé au moins en partie au-dessous du bâti de véhicule (1) et étant fixé au bâti de véhicule (1) de façon amovible.

5. Attelage à trois points selon au moins une des revendications précédentes, **caractérisé en ce que** le bâti inférieur (14) est relié au bâti (5) par l'intermédiaire d'au moins un organe de positionnement (19).

6. Attelage à trois points selon au moins une des revendications précédentes, **caractérisé en ce que** l'organe de positionnement (19) est un vérin hydraulique à double effet (18) qui est disposé en position horizontale au-dessous du bâti de véhicule (1).

7. Attelage à trois points selon au moins une des revendications précédentes, **caractérisé en ce que** le bras inférieur (7, 8) est articulé avec le bâti de véhicule (1) par l'intermédiaire d'un support oscillant à longueur variable (23, 24).

8. Attelage à trois points selon au moins une des revendications précédentes, **caractérisé en ce que** le support oscillant à longueur variable (23, 24) est un ensemble piston-cylindre à double effet (21, 22) avec une tige de piston (25, 26) et un tube cylindrique (27, 28).

9. Attelage à trois points selon au moins une des revendications précédentes, **caractérisé en ce que** le tube cylindrique (27, 28) est relié au bâti de véhicule (1) par l'intermédiaire d'un autre joint à rotule (29, 30) logé dans les points d'articulation (31, 32), et la tige de piston (25, 26) est reliée à pivotement au bras inférieur associé (7, 8) par l'intermédiaire d'un palier articulé (33, 34) logé dans les points d'articulation (35, 36).

10. Attelage à trois points selon au moins une des revendications précédentes, **caractérisé en ce que**, les tiges de piston (25, 26) étant entièrement rentrées dans les tubes cylindriques (27, 28), les ensembles piston-cylindre (21, 22) s'étendent parallèlement à l'axe de rotation vertical (10) de manière équidistante à l'axe de rotation vertical (10) lorsque les bras inférieurs (7, 8) sont relevés en position haute (41) et que le bâti (5) avec les bras inférieurs (7, 8) articulés à lui est pivoté simultanément autour de l'axe de rotation (10) en direction du bâti de véhicule (1).

11. Attelage à trois points selon au moins une des revendications précédentes, **caractérisé en ce que**, lors du pivotement des bras inférieurs (7, 8) autour de l'axe de rotation horizontal (9), les ensembles piston-cylindre (21, 22) fonctionnent en parallèle.

12. Attelage à trois points selon au moins une des revendications précédentes, **caractérisé en ce que**, lors du pivotement du bâti (5) autour de l'axe de rotation vertical (10), les ensembles piston-cylindre (21, 22) fonctionnent en série.
